# EUROPÄISCHE PATENTSCHRIFT

(11) **EP 3 302 930 B1**
(45) Veröffentlichungstag und Bekanntmachung des Hinweises auf die Patenterteilung: **25.08.2021**
(21) Anmeldenummer: 16730754.5
(22) Anmeldetag: 08.06.2016
(51) Int. Cl.: B29C 48/90, B29C 48/10, B29C 55/28, B29C 48/92

(54) **KALIBRIEREINRICHTUNG UND VERFAHREN ZUM KALIBRIEREN EINES FOLIENSCHLAUCHES**
CALIBRATING DEVICE AND METHOD FOR CALIBRATING A FILM TUBE
PROCÉDÉ ET DISPOSITIF POUR CALIBRER UN FILM TUBULAIRE

(30) Priorität: 08.06.2015 DE 102015210466
(43) Veröffentlichungstag der Anmeldung: 11.04.2018
(73) Patentinhaber: Windmöller & Hölscher KG, 49525 Lengerich (DE)
(72) Erfinder: GOLDENSTEIN, Jens, 49525 Lengerich (DE)
(86) Internationale Anmeldenummer: PCT/EP2016/063000
(87) Internationale Veröffentlichungsnummer: WO 2016/198439

(56) Entgegenhaltungen:
- WO-A1-2012/032128
- WO-A1-2012/159233
- DE-A1- 1 937 978
- DE-A1- 10 160 321
- JP-B1- S 495 739
- US-A- 3 622 657
- US-A- 3 663 134

## Beschreibung

Die Erfindung betrifft eine Kalibriereinrichtung nach dem Oberbegriff des Anspruchs 1 und ein Verfahren zum Kalibrieren eines Folienschlauches nach dem Oberbegriff des Anspruchs 13.
Ein Folienschlauch, der gerade die Ringdüse einer Blasfolienanlage verlassen hat, sollte möglichst schnell abgekühlt werden. Zum einen kann ein Folienschlauch durch schnellere Abkühlung auch schneller produziert werden. Zum anderen beeinflusst die Abkühlgeschwindigkeit auch die Eigenschaften der Folien, die letztendlich aus dem Folienschlauch entsteht. Besondere Materialzusammensetzungen eines Folienschlauches erfordern sogar eine besonders hohe Abkühlgeschwindigkeit. Um eine Folie besonderes effizient herstellen zu können, ist es zudem erforderlich, den Durchmesser der Kalibriereinrichtung einstellen zu können.

Die Druckschrift WO 2012/032128 A1 offenbart eine Vorrichtung und ein Verfahren nach den Oberbegriffen, sie zeigt einen solche Kalibriereinrichtung. Allerdings ist es nicht möglich, die Führungslänge, welche einen Bereich darstellt, durch welchen der Schlauch geführt wird, unabhängig vom Durchmesser der Kalibriereinrichtung konstant zu halten oder einzustellen.
Die Aufgabe der vorliegenden Erfindung ist es daher, eine Kalibrierungseinrichtung und ein Verfahren zu schaffen, mit denen die oben genannten Anforderungen zumindest teilweise erfüllbar sind.

Die Aufgabe wird gelöst durch die Merkmale des Anspruchs 1.

Der Folienschlauch ist gemäß der Erfindung in seinem Durchmesser dadurch einstellbar, dass ein Gas, vorzugsweise Luft, mit einem Überdruck in das Innere des Folienschlauchs geleitet wird. Dadurch entsteht eine Folienblase, deren Durchmesser sich dadurch bestimmt, dass der Innendruck so groß ist wie der Außendruck und die Kräfte, die der sich bereits verfestigende Folienschlauch aufbringt.
Weiterhin ist erfindungsgemäß wenigstens ein Führungselement zum Führen der Folie vorgesehen, welches die radiale Ausdehnung des Folienschlauchs nochmals begrenzt, indem es eine nach innen wirkende Kraft auf den Schlauch ausübt. Dem Führungselement ist dabei wenigstens eine Führungsfläche zugeordnet, die der Außenseite des Folienschlauchs zugewandt ist. Diese Führungsfläche steht somit im direkten oder indirekten Kontakt mit dem Folienschlauch. Die Führungsfläche kann dabei mit dem Führungselement vereinigt sein, d.h. an diesem befestigt sein, mit dem Führungselement einteilig ausgebildet sein oder ein separates Bauteil sein. In letzterem Fall kann die Führungsfläche sich über mehrere Führungselemente erstrecken. Das Führungselement und/oder die Führungsfläche stellen eine Führungslänge zur Verfügung. Unter Führungslänge sind die Teile der Erstreckung des Führungselements bzw. der Führungsfläche zu verstehen, die in Transportrichtung des Folienschlauches gesehen im Wesentlichen parallel zur Außenoberfläche des Folienschlauches verlaufen.

Um nun den Durchmesser des Folienschlauches verstellen zu können, ist erfindungsgemäß, vorgesehen, dass das Führungselement sich zumindest in radialer Richtung des Folienschlauches in seiner Position verändern lässt. Mit anderen Worten legt der Folienschlauch eine Symmetrieachse fest, zu der sich das Folienführungselement in seinem Abstand verstellen lässt. Dies umfasst auch die entsprechende Positionsveränderung der Führungsfläche. Vorzugsweise umfasst die Kalibriereinrichtung eine ortsfeste Stützvorrichtung, an welcher sich das Führungselement abstützt, aber relativ zu welcher das Führungselement bewegbar ist.

Im oberen Bereich der Kalibriervorrichtung ist ein Flüssigkeitsreservoir vorgesehen. Von diesem aus ist eine Flüssigkeit auf den Außenumfang des Folienschlauchs gebbar, so dass dieser vorzugsweise von einem geschlossenen Flüssigkeitsfilm umgeben ist. Die Flüssigkeit erfüllt dabei zwei wichtige Funktionen. Zum einen mindert sie die Reibung zwischen der Führungsfläche und der Außenoberfläche des Folienschlauches, zum anderen kann sie Wärme von dem Folienschlauch abführen, so dass eine schnellere Kühlung realisierbar ist. Im diesem Falle steht der Folienschlauch somit in indirektem Kontakt mit der Führungsfläche, indem zwischen beiden sich noch die Flüssigkeit befindet. Als Flüssigkeit ist Wasser bevorzugt, welches günstig in der Beschaffung und einfach in der Handhabung ist.

Erfindungsgemäß ist die Führungslänge unabhängig vom Abstand der Führungsfläche und/oder des Führungselements zur Symmetrieachse einstellbar oder konstant. Mit anderen Worten bedingt die Änderung des Abstandes des Führungselements von der Symmetrieachse keine Änderung der Führungslänge, denn diese ist erfindungsgemäß konstant. Sollte eine alleinige Änderung des besagten Abstandes zu einer Änderung der Führungslänge führen, so ist erfindungsgemäß die Führungslänge einstellbar, so dass sie beispielsweise wieder auf den vorherigen oder auf einen gewünschten Wert eingestellt werden kann. Die hierzu vorteilhaften Mechanismen bzw. Aufbauten werden weiter unten im Zusammenhang mit den Figuren näher erläutert.

In einer weiteren, vorteilhaften Ausgestaltung der Erfindung ist vorgesehen, dass das zumindest eine Führungselement und/oder die zumindest eine Führungsfläche, in Transportrichtung gesehen, am Beginn der Kalibriereinrichtung einen Einlaufbereich mit einem sich in Transportrichtung verengenden Querschnitt ausbildet. Der sich verengende Querschnitt bildet dabei gewissermaßen einen Trichter aus, in dem der noch nicht vollständig erkaltete Folienschlauch auf schonende Weise in die Kalibriereinrichtung eingeführt werden kann, ohne dass der Folienschlauch dabei beschädigt wird. Besondere Vorteile ergeben sich in Kombination mit dem oben genannten Flüssigkeitsreservoir, wenn dieses sich in diesem Einlaufbereich mit sich verengendem Querschnitt befindet. Im unteren Bereich dieses Einlaufbereichs unterliegt die Flüssigkeit einem höheren Druck, so dass sie auf einfache Weise auf den Außenumfang des Folienschlauches aufbringbar ist, so dass sich zwischen Kalibriereinrichtung und Folienschlauch ein Flüssigkeitsfilm ausbildet.

In einer vorteilhaften Weiterbildung ist der Querschnitt des Einlaufbereichs unabhängig vom Abstand der Führungsfläche und/oder des Führungselements zur Symmetrieachse einstellbar oder konstant. Bei aus dem Stand der Technik bekannten Kalibriereinrichtungen sind der Abstand und der Querschnitt nicht auf unabhängige Art und Weise einstellbar. Eine Unabhängigkeit der Einstellbarkeit dieser beiden Parameter (Abstand zur Symmetrieachse und Querschnitt des Einlaufbereichs) ist vorteilhaft, da in diesem Fall auch bei unterschiedlichen Abständen zur Symmetrieachse Folienschläuche mit unterschiedlichen Durchmessern, aber gleicher oder in etwa gleicher Qualität herstellbar sind. Die Qualität der Folienschläuche hängt unter anderem von der Form des Querschnitts des Einlaufbereichs ab. Ist dieser optimal eingestellt, ergibt sich eine optimale Qualität des Folienschlauches.

Vorteilhaft ist es, wenn der Einlaufbereich im Querschnitt zumindest teilweise einen kreisbogenförmigen Querschnitt aufweist. Ein teilweise kreisbogenförmiger Querschnitt ist einfach zu erzeugen, indem beispielsweise dieser Teil des Querschnitts durch ein schlauchartiges Element erzeugt wird. Weiterhin bietet ein teilweise kreisbogenförmiger Querschnitt Vorteile bei der Einstellbarkeit, da sich ein kreisbogenförmiger Querschnitt auch bei einer Veränderung des Abstands zur Symmetrieachse beibehalten lässt. Insbesondere kann bei einer Abstandsveränderung der Radius des kreisbogenförmigen Querschnitts beibehalten werden.

In Bezug auf das Flüssigkeitsreservoir ist es besonders vorteilhaft, wenn in dem Einlaufbereich zur Bildung des Flüssigkeitsreservoirs ein statischer Flüssigkeitsring vorgesehen ist. Der Flüssigkeitsring ergibt sich dadurch, dass die Flüssigkeit in den Einlaufbereich hineingegeben wird, wobei die Oberkante des Flüssigkeitsrings (also der Flüssigkeitsspiegel) in oder auch oberhalb des Einlaufbereichs liegen kann. Die statische Ausbildung des Flüssigkeitsrings wird durch Hinzufügung von Flüssigkeit in der Menge, die von dem Folienschlauch mitgenommen wird, erreicht. Wichtig ist dabei also, dass der Flüssigkeitsspiegel eine konstante Höhe einnimmt. Hierzu kann eine Regelung vorgesehen sein, die den Flüssigkeitsspiegel überwacht und bei Bedarf durch Erhöhung oder durch Verringerung der Flüssigkeitszufuhr korrigiert. Eine konstante Höhe des Flüssigkeitsspiegels ist vorteilhaft, um die Abkühlrate des Folienschlauches konstant zu halten. Dies führt zu einer gleichbleibenden Qualität des Folienschlauches über die gesamte Produktionsdauer.

In einer vorteilhaften Ausgestaltung der erfindungsgemäßen Kalibriervorrichtung stellt das zumindest eine Führungselement oder wenigstens ein Teil der Gesamtheit der Führungselemente einen zylindrischen, tonnenförmigen oder konischen Bereich für den Folienschlauch bereit. Auf diese Weise kann der Folienschlauch auf einen bestimmten Durchmesser festgelegt werden, insbesondere wenn ein zylindrischer Bereich bereitgestellt ist. Eine tonnenförmige Aufweitung im Verlauf der Kalibriervorrichtung kann jedoch ebenfalls vorteilhaft sein, da im aufgeweiteten Bereich die Flüssigkeitsmenge und damit die Kühlwirkung vergrößert sein können. Auch ein konischer Bereich kann vorteilhaft sein, insbesondere, wenn der Durchmesser in Transportrichtung abnimmt. Bei einem in Transportrichtung abnehmenden Durchmesser, was auch bei einem tonnenförmigen Bereich zumindest teilweise zutrifft, wird der Durchmesser des Folienschlauchs in guter Weise stabilisiert. Vorteilhaft ist eine Ausführungsform der Erfindung, in der eine Mehrzahl an Führungselementen vorgesehen ist, welche in ihrem Abstand zur Symmetrieachse einstellbar sind. Diese Einstellung des Abstandes kann für jedes Führungselement individuell erfolgen. Denkbar ist jedoch auch eine gemeinsame Verstellbarkeit in Gruppen von Führungselementen, wobei dann innerhalb dieser Gruppe die einzelnen Führungselementen miteinander direkt oder indirekt verbunden sein können, so dass die Verstellung eines der Führungselemente auch zur Verstellung der anderen Führungselemente führen kann. Eine besondere Ausgestaltung dieser Variante umfasst lediglich eine Gruppe, d.h. alle Führungselemente sind gemeinsam verstellbar.

Ferner ist es vorteilhaft, wenn das zumindest eine Führungselement sich im Wesentlichen parallel zur Transportrichtung des Folienschlauchs erstreckt. Das bedeutet, dass dessen Ausdehnung in Umfangsrichtung wesentlich kleiner ist als die Ausdehnung in Transportrichtung des Schlauches. "Wesentlich kleiner" bedeutet dabei, dass der Faktor kleiner ist als ein Zehntel. Mit anderen Worten sind in dieser Ausführungsform über den Umfang gesehen eine große Anzahl an Führungselementen vorgesehen, so dass die Führungselemente zum Führen des Schlauches ein Polygon darstellen, welches einen Kreis möglichst gut, d.h. nur mit leichten Abweichungsfehlern, darstellt.

Gemäß der Erfindung ist vorgesehen, dass das zumindest eine Führungselement eine Mehrzahl einzelner Körper oder Windungen einer Feder umfasst, welche untereinander über wenigstens ein Verbindungselement verbunden sind. Bevorzugt sind die einzelnen Körper jeweils über wenigestens ein Verbindungselement miteinander verbunden. Durch eine Veränderung der Länge des Verbindungselements können die Körper auseinandergedrückt oder zusammengezogen werden, wobei die Körper dann, da sie alle auf einem Kreis angeordnet sind, ihre radiale Position verändern, wobei der Abstand zur Symmetrieachse veränderbar ist.

In weiterer Ausgestaltung ist vorgesehen, dass das wenigstens eine Verbindungselement aus flexiblem Material besteht und einen geschlossenen Raum umschreibt, der mit einem Fluid befüllbar ist. Dieses Fluid kann dabei unter Überdruck oder unter Unterdruck stehen, so dass eine Bewegung in beiden Richtungen möglich ist. Die Flexibilät führt zu der benötigten Längenänderung. Die Gesamtheit der Verbindungselemente kann dann nach dem Prinzip eines Wellenbalges eine Abstandsänderung der Führungselemente zur Symmetrieachse hervorrufen. Insbesondere können mehrere Verbindungselemente den geschlossenen Raum umschreiben, d. h. diese Verbindungselemente sind gemeinsam mit einem Fluid befüllbar.
In einer Ausführungsform mit den beschriebenen Verbindungselementen ist es vorteilhaft, wenn das zumindest eine Führungselement sich frei bewegbar auf einem Abstützelement abstützt. Dieses Abstützelement kann sich wiederum direkt oder indirekt an einer relativ zur Maschinenhalle festen Anordnung abstützen.

Es kann vorgesehen sein, dass die Führungsfläche durch wenigstens ein elastisch verformbares Element bereitgestellt ist. In diesem Fall kann es vorgesehen sein, dass das zumindest eine Führungselement das elastisch verformbare Element trägt und/oder in seinen Dimensionen einstellt. Der Vorteil eines elastisch verformbaren Elements ist, dass durch Krafteinwirkung die Führungsfläche gezielt verformbar ist. In einer vorteilhaften Weiterbildung ist dabei vorgesehen, dass das wenigstens eine elastisch verformbare Element sich über mehrere Elemente erstreckt. In diesem Fall kann das elastisch verformbare Element auch an solchen Orten eine Führungsfläche bereitstellen, an der sich kein Führungselement befindet. Es dient also in gewisser Weise der Überbrückung von Freiräumen.
Die oben genannte Aufgabe wird auch gelöst durch die Merkmale des Anspruchs 13. Die Vorteile, die durch das erfindungsgemäße Verfahren erzielt werden, entsprechen denen der erfindungsgemäßen Vorrichtung.
Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Kalibriereinrichtung und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
Die einzelnen Figuren zeigen:
- Fig. 1: Einen Schnitt durch eine Kalibriereinrichtung nach dem Stand der Technik
- Fig. 2: Einen Schnitt durch eine erfindungsgemäße Kalibriereinrichtung
- Fig. 3: Eine Ausführungsform eines ringförmigen Körpers
- Fig. 4: Eine Variante des ringförmigen Körpers
- Fig. 5: Eine weitere Variante des ringförmigen Körpers
- Fig. 6: Eine weitere Variante des ringförmigen Körpers
- Fig. 7: Eine weitere Variante der erfindungsgemäßen Kalibriereinrichtung
- Fig. 8: Den Schnitt VIII-VIII aus Figur 7
- Fig. 9: Eine weitere Variante der erfindungsgemäßen Kalibriereinrichtung
- Fig. 10: Eine weitere Variante der erfindungsgemäßen Kalibriereinrichtung
- Fig. 11: Ansicht XI-XI aus der Figur 10
- Fig. 12: Eine weitere Variante der erfindungsgemäßen Kalibriereinrichtung
- Fig. 13: Ansicht XIII-XIII aus der Figur 12
- Fig. 14: Eine weitere Variante der erfindungsgemäßen Kalibriereinrichtung

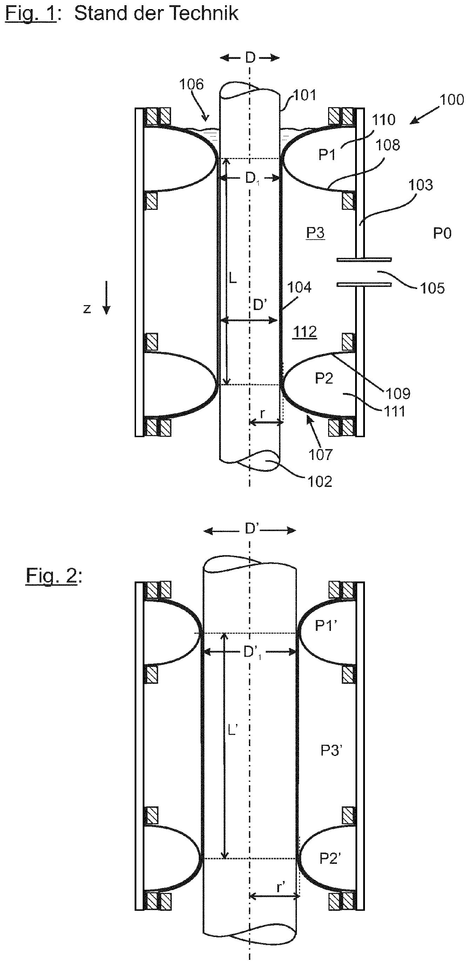

Die **Figur 1** zeigt einen Schnitt durch eine Kalibriereinrichtung, wie sie aus der WO 2012/032128 bekannt ist. Der Folienschlauch 101, der vorzugsweise durch eine oberhalb der Kalibriereinrichtung 100 angeordneten Schlauchfolienextrusionsvorrichtung erzeugt wird, wird in Transportrichtung z abgezogen. Zu erkennen ist die Achse 102, die im Wesentlichen die Symmetrieachse des Folienschlauchs 101 darstellt. Der Folienschlauch 101 selbst hat den Außendurchmesser D. Die Kalibiereinrichtung umfasst als weiteres Element die Hülse 103, die vorteilhafterweise aus einem festen Material besteht und zylinderförmig ausgeformt sein kann. Die Führung und damit die Kalibrierung des Folienschlauches 101 übernimmt das elastisch verformbare Element 104, dessen Innendurchmesser D' leicht über dem Außendurchmesser D des Folienschlauches 101 liegt, so dass zwischen dem Folienschlauch und dem elastisch verformbaren Element 104 ein - vorzugsweise vollflächiger - Fluidfilm vorgesehen werden kann. Als Fluid kommt vorzugsweise eine Flüssigkeit, insbesondere Wasser, zur Anwendung. Der Innendurchmesser kann jedoch in Richtung z zunehmen oder abnehmen oder ungleichmäßig sein, was später noch näher beschrieben wird. Das elastisch verformbare Element 104 ist an der Hülse angeordnet, beispielsweise befestigt. Die Anordnung erfolgt vorteilhafterweise so, dass ein Fluid, etwa ein Gas, insbesondere Luft, nicht unkontrolliert aus dem durch das elastisch verformbare Element und der Hülse gebildeten Raum 112 austreten kann. Ein Fluidzulauf oder -ablauf wird durch die Öffnung 105 zur Verfügung gestellt. Die aus der WO 2012/032128 A1 bekannten Ausführungsbeispiele lassen sich in vorteilhafter Weise mit den Ausführungsbeispielen und Merkmalen der vorliegenden Anmeldung kombinieren. Daher gilt der gesamte Inhalt der WO 2012/032128 A1 als in diese vorliegende Patentanmeldung mit aufgenommen.

Im Einlaufbereich 106 und im Auslaufbereich 107 des Folienschlauches 101 in die Kalibriervorrichtung 100 sind als Schläuche 108 und 109 ausgebildete, ringförmige Körper vorgesehen, die im Wesentlichen rotationssymmetrisch zur Achse 102 sind, wobei diese Achse die Körper nicht schneidet. In der Figur 1 umgibt jeder Schlauch 108, 109 für sich mit einem Abschnitt der Hülse einen Raum 110, 111, der keine Verbindung mit dem durch die Hülse und dem elastisch verformbaren Element gebildeten Raum 112 aufweist. Somit kann das Volumen und/oder der Innendruck der Räume 110, 111 unabhängig voneinander und jeweils unabhängig vom Raum 112 durch Zufuhr oder Abfuhr eines Fluids eingestellt werden. Das Fluid kann hier wiederum ein Gas, insbesondere Luft sein.

Der Radius r beschreibt den Abstand zwischen der Achse 102 und dem dieser Achse am nächsten liegenden Punkt oder der am nächsten liegenden Linie des ringförmigen Körpers, wobei der Radius r die kürzeste Verbindung ist, also orthogonal zur Achse 102 liegt.

Die Führungslänge L beschreibt die Strecke, entlang welcher der Folienschlauch 101 effektiv von dem elastisch verformbaren Körper führbar ist. Diese Strecke entspricht im Wesentlichen dem Abstand der Punkte bzw. der Linien der Schläuche 108, 109, die der Achse 102 am nächsten liegen. Im vorliegenden Beispiel ist dies der Abstand der Scheitelpunkte der beiden Schläuche 108 und 109.

Anhand der **Figur 2** ist nun zu erkennen, dass bei einer Vergrößerung des gewünschten Durchmessers D des Folienschlauches 101 nicht nur der Innendurchmesser D' zu vergrößern ist, sondern auch der Radius r, wobei das Volumen der Räume 110, 111 zu reduzieren ist. Die Lage der Scheitelpunkte der Schläuche 108, 109 ändert sich nicht, so dass die Führungslänge L im Wesentlichen gleich bleibt. Dennoch ändert sich der Querschnitt der Schläuche, so dass sich insbesondere im Einlaufbereich des Folienschlauches in die Kalibriereinrichtung eine andere Einlaufsituation ergibt, die einen besonderen Einfluss auf die Folienqualität haben kann.

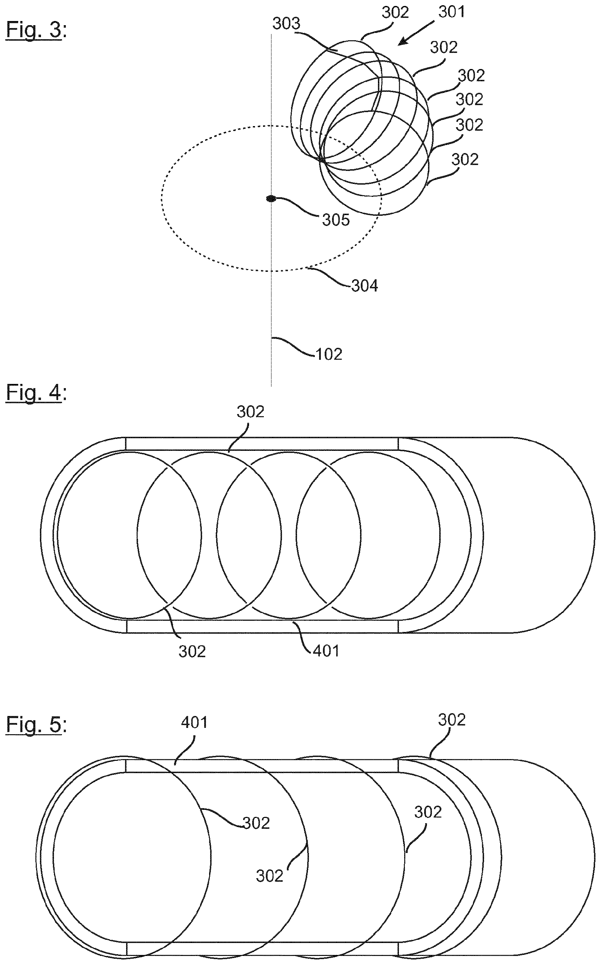

Die **Figur 3** zeigt nun einen Ausschnitt 301 eines ringförmigen Körpers, der in einer erfindungsgemäßen Kalibriereinrichtung einbaubar ist, in einer perspektivischen Ansicht. Zur Veranschaulichung des kreisrunden Körpers ist in gestrichelter Linie ein Kreis 304 dargestellt, dessen Mittelpunkt 305 die Symmetrielinie 102 schneidet. Dieser ringförmige Körper umfasst eine beispielsweise entlang des gedachten Kreises 304 angeordnete Mehrzahl eines ersten Bauteils 302, welches ein die Kontur bzw. die Querschnittsform vorgebendes Bauteil ist. Dieses Bauteil weist ein umlaufendes Element, wie etwa einen kreisrunden Ring, auf. Diese die Kontur vorgebenden Bauteile sind jeweils mit einem gegenseitigen Abstand, welche vorzugsweise konstant ist, um die Symmetrieachse angeordnet, zu der sie jeweils einen gleichen Abstand haben. Jeweils zwei Bauteile sind nun miteinander verbunden, so dass letztendlich alle Bauteile miteinander gekoppelt sind. Bevorzugt sind jeweils zwei benachbarte Bauteile auf diese Weise miteinander verbunden. Zur Verbindung sind ein oder mehrere elastische Elemente 303 vorgesehen. Als elastische Elemente sind federnde Elemente denkbar, wie etwas Federn oder Gummistäbe. Diese Elemente 303 sind in der Figur 3 vereinfacht als Verbindungslinien dargestellt, welche an den oberen Scheitelpunkten der als kreisrunde Ringe dargestellten umlaufenden Elemente angreifen. Dennoch sei betont, dass die Elemente auch an anderen und/oder mehreren Stellen der Bauteile 302 an diese angreifen können.

Zur Durchmesserverstellung des ringförmigen Körpers, also zur Variation des Abstandes r, können beispielsweise mechanische Antriebsmittel wie etwa Hebelarme vorgesehen sein, die beispielsweise an der Hülse 103 angelenkt und schwenkbar sind. Die anderen Enden der Hebelarme können an mehrere oder an alle der Bauteile 302 angreifen.

Die **Figur 4** offenbart nun eine weitere, vorteilhafte Variante des ringförmigen Körpers, wobei jedoch ein Abschnitt abgewickelt gezeigt ist. Hierbei sind die Bauteile 302 durch einen einzigen Schlauch 401 miteinander verbunden, wobei dieser Schlauch 401 die Bauteile 302 umhüllt. Die Bauteile 302 selbst sind wiederum als kreisrunde Ringe dargestellt, jedoch nicht auf diese Ausführungsform beschränkt. Die Bauteile 302 können auf eine geeignete Art mit dem Schlauch verbunden sind, beispielsweise verklebt. Die **Figur 5** zeigt eine etwas abgewandelte Ausführungsform, bei der die Bauteile 302 den Schlauch 401 umgeben, was fertigungstechnische Vorteile mit sind bringen kann. Hier können die Bauteile 302 von außen auf den bereits geschlossenen Schlauch 401 aufgeklebt werden.

Der Aufbau des ringförmigen Körpers gemäß der Figuren 4 und 5 bringt den Vorteil mit sich dass, die Bauteile 302 im Wesentlichen den Querschnitt des ringförmigen Körpers vorgeben, wogegen der Schlauch durch Hinzufügen oder entfernen eines Teils des beinhalteten Luftvolumens den Abstand r vergrößert oder verkleinert. Damit einhergehend kann - je nach Beschaffenheit des Schlauches - dieser zwischen zwei Bauteilen 302 seinen Querschnitt etwas vergrößern oder verkleinern, was jedoch durch ein Vorsehen einer möglichst hohen Anzahl an Bauteilen 302 verringert werden kann. Vorteilhafterweise werden derart viele Bauteile 302 vorgesehen, dass bei dem kleinsten Abstand r min zwischen dem ringförmigen Körper und der Symmetrieachse 102 entlang der der Symmetrieachse am nächste liegenden, geschlossenen Linie die Bauteile nahezu aneinander anliegen.

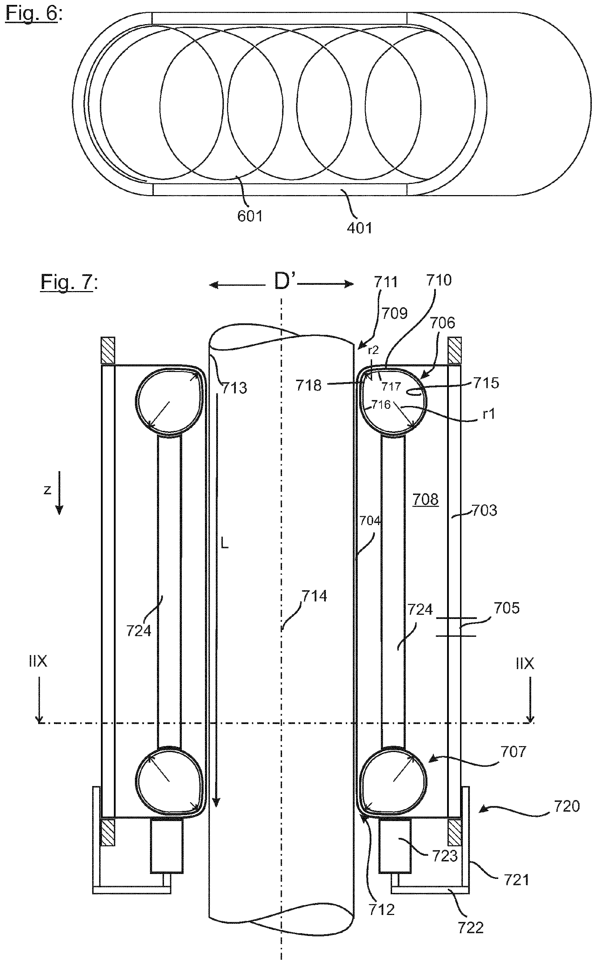

In der **Figur 6** ist nun eine Abwandlung der Ausführungsform der Figur 4 zu sehen, bei der die einzelnen Bauteile 302 ersetzt worden sind durch eine Feder 601, insbesondere eine Zugfeder. Dabei übernimmt jede Windung der Feder (ein Umlauf entlang des Federmaterials um 360 Grad) die Funktion eines einzelnen Bauteils 302. Das Vorsehen einer Feder erleichtert einerseits die Montage des ringförmigen Körpers, andererseits wird damit erreicht, dass die einzelnen Windungen zu den benachbarten Windungen einen einheitlichen, möglichst konstanten Abstand einnehmen, was bei den separaten Bauteilen 302, welche nur durch das oder die elastischen Elemente miteinander verbunden sind, nicht immer gewährleistet ist. Analog zu den Ausführungsbeispielen in den Figuren 4 und 5 kann die Feder innerhalb des Schlauches 401 (wie es in der Figur 6 dargestellt ist) oder um den Schlauch herum angeordnet sein, was jedoch nicht gezeigt ist.

Wird in einem Ausführungsbeispiel, bei dem eine Feder einen Schlauch umgibt oder von einem Schlauch umgeben wird, der Abstand zwischen der Symmetrieachse und dem ringförmigen Körper verändert, so kann eine Veränderung des Querschnitts des ringförmigen Körpers messbar sein. Der Grund ist darin zu suchen, dass eine Feder, wenn sie auseinander gezogen wird, einen etwas geringeren Außenumfang aufweist und umgekehrt. Die aufgrund dieses Phänomens auftretenden Änderungen des Körperquerschnitts des ringförmigen Körpers sind in der Praxis hinnehmbar und verändern daher nicht den Gedanken der vorliegenden Erfindung. Solche Ausführungsformen sind daher als unter die Patentansprüche fallend anzusehen.

Ebenso ist es bei den im Zusammenhang mit den Figuren 4 bis 6 beschriebenen Ausführungsbeispielen so, dass der Querschnitt des ringförmigen Körpers - in Umfangsrichtung der Symmetrieachse gesehen - sich fortwährend, insbesondere periodisch, ändern kann, da die einzelnen Bauteile 302 bzw. die Windungen der Feder 601, die jeweils als Stützstellen anzusehen sind, einen Abstand haben und der Schlauch in den Zwischenbereichen einen geringeren Durchmesser aufweisen kann als unmittelbar an den Stützstellen. Auch diese Abweichungen von den idealen, über den gesamten Umlauf konstanten Querschnitt des ringförmigen Körpers sind hinnehmbar und insbesondere durch eine geeignete Material- und/oder Dimensionswahl des Schlauches beeinflussbar. Auch solche Abweichungen sind vom Erfindungsgedanken umfasst und somit als unter die Patentansprüche fallend anzusehen.

Die **Figur 7** zeigt einen Querschnitt einer Ausführungsform einer erfindungsgemäßen Kalibriereinrichtung. An der Hülse 703 ist wiederum das elastisch verformbare Element 704 derart befestigt, dass über den Fluidanschluss ein Fluid, insbesondere ein Gas, vorzugsweise Luft, derart einbringbar oder herausführbar ist, dass sich ein bestimmter Druck P1 und/oder ein bestimmtes Volumen V1 bei gegebener Temperatur in dem durch die Hülse und das elastisch verformbare Element umschlossenen Raum 708 einstellt. Die ringförmigen Körper 706 und 707 sind innerhalb des Raumes 708 angeordnet, wobei jeweils ein Bereich des elastisch verformbaren Elements 704 jeweils von Oberflächenteilen des ringförmigen Körpers 706, 707 getragen wird. Die Bereiche des elastisch verformbaren Elements 704, die von den ringförmigen Körpern getragen werden, befinden sich im Einlaufbereich 711 und dem Austrittsbereich 712 der Kalibriereinrichtung für den Folienschlauch 713.

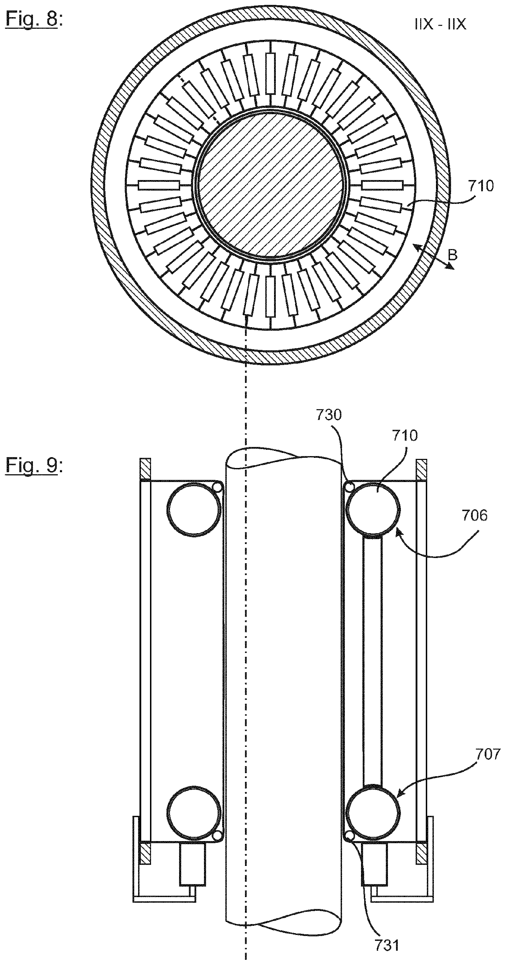

Die ringförmigen Körper 706, 707 können hinsichtlich ihres Aufbaus einem der ringförmigen Körper entsprechen, die anhand der Figuren 4 bis 6 offenbart worden sind. Im Fall der Figur 7 umfasst der ringförmige Körper einen flexiblen Schlauch 709, der mehrere Bauteile 710, die als Stützelemente dienen, umgibt. Es sei an dieser Stelle betont, dass die Bauteile 710 ebenfalls wieder Windungen einer Feder sein können. Wie bereits oben beschrieben, können die Bauteile auch den Schlauch umgeben. Die Bauteile 710 sind entlang eines Kreises angeordnet, wie nachfolgend noch anhand der Figur 8 erläutert werden wird. Eine Besonderheit der Stützelemente 710 ist nun, dass ihr Querschnitt von einer Kreisform abweicht. Dabei kann beispielsweise der Umfang dieses Querschnitts zunächst einen Kreisbogen 715 mit dem Radius r₁ umfassen, wobei dieser Kreisbogen sich über einen Winkel von bis zu 270 Grad erstrecken kann. Daran können sich Geraden 716, 717 anschließen, die vorzugsweise parallel zur Symmetrieachse 714 (im Falle der Geraden 716) beziehungsweise orthogonal dazu verlaufen (Gerade 717). Die beiden Geraden können vorzugsweise durch einen weiteren Kreisbogen 718 miteinander verbunden sein, der einen Radius r₂ aufweisen kann, wobei vorzugsweise r₂ < r₁ gilt. Es ist zu betonen, dass die Kreisbögen aus einer Anzahl von Kreisbögen bestehen können, die unterschiedliche Radien aufweisen. Auch kann die Umfangslinie des Bauteils 706 anderweitig gebogene oder auch gerade Abschnitte umfassen. Der Ausformung des Bauteils sind keine Grenzen gesetzt. Bei dem beschriebenen Aufbau werden Teile des elastisch verformbaren Elements 704 im Wesentlichen durch die Geraden 716 und 717 und dem Kreisbogen 718 getragen.

Der ringförmige Körper 706 ist derart mit einem Fluid, insbesondere ein Gas, vorzugsweise Luft, beaufschlagbar, so dass sich in seinem Inneren bei gegebener Temperatur ein Druck P2 und/oder ein Volumen V2 einstellt. Eine Veränderung des Volumens durch Zu- oder Abführung des Fluids führt in erster Linie zu einer Veränderung des Abstandes des ringförmigen Körpers 706 zur Symmetrieachse 714, möglicherweise aber auch zu einer gleichzeitigen Änderung des Innendrucks P2. Der ringförmige Körper 707 kann mit einem Fluid mit einem Druck P3 und/oder einem Volumen P3 beaufschlagt werden, wobei P2 und P3 gleich, aber auch unterschiedlich sein können. Entsprechendes gilt für die Volumina V2 und V3.

Der Durchmesser D' der Kalibriereinrichtung kann nun durch die Zufuhr einer passenden Fluidmenge eingestellt werden, wobei sich Drücke P1, P2, P3 und/oder Volumina V1, V2 und V3 ergeben. Dies kann an einem Beispiel, bei dem P1 dem Umgebungsdruck entspricht und der entsprechend ursprüngliche Durchmesser Dinitial kleiner D' ist, verdeutlicht werden. Wird in diesem Beispiel die Fluidmenge im Raum 708 verkleinert, so verkleinert sich das Volumen, da der Umgebungsdruck gleich bleibt und somit P1 ebenfalls gleich bleiben dürfte. Aufgrund der Verkleinerung des Volumens vergrößert sich der Durchmesser auf D'. Um auch den Einlauf- und den Austrittsbereich auf den Durchmesser D' zu bringen, müssen nun die Fluidmengen in den ringförmigen Körpern 706 und 707 vergrößert werden, so dass deren Volumina V2 und V3 größer werden. Da sich aber der Querschnitt nicht oder nur minimal ändern kann, wirkt sich diese Maßnahme auf den Abstand zwischen der Symmetrieachse 714 und dem ringförmigen Körper 706, 707 aus, wobei dieser Abstand größer wird. Die Führungslänge L bleibt dabei im Wesentlichen unverändert.

Die ringförmigen Körper sind durch eine Stützstruktur 720 in ihren Positionen relativ zu der Hülse 703 gehalten, so dass sie sich nicht in oder gegen die Richtung z bewegen und auch symmetrisch zu der Symmetrieachse 714 verbleiben. Dazu kann die Stützstruktur zunächst einen Ansatz 721 umfassen, an welchem radial nach innen gerichtete Stützelemente 722 angelenkt sind, die an den Innendurchmesser des elastisch verformbaren Elements 704 anpassbar sind. Dazu können die Stützelemente 722 schwenkbar ausgestaltet oder nach Art von Scherenhebeln aufgebaut sein. Auf diesen Stützelementen stützen sich Träger 723 ab, auf welchen sich der ringförmige Körper 707 aufstützt. Der ringförmige Körper 706 stützt sich nun über Abstandhalter 724 auf dem ringförmigen Körper 707 ab, wobei vorzugsweise jedem Bauteil 710 ein Abstandhalter 724 zugeordnet ist. Dieser Sachverhalt ist deutlicher der **Figur 8** zu entnehmen, welche den Schnitt IIX - IIX in der Figur 7 zeigt. In dieser Figur sind zusätzlich die auf einem Kreis angeordneten Bauteile 710 zu erkennen. Mit dem durch den Buchstaben B gekennzeichneten Doppelpfeil ist die radiale Bewegungsrichtung angedeutet, in die das betreffende Bauteil 710 bei der Veränderung des Durchmessers D bewegbar ist.

Die **Figur 9** zeigt nun ein gegenüber der Figur 7 abgewandeltes Ausführungsbeispiel, bei dem die ringförmigen Körper 706, 707 wiederum Bauteile 710 umfassen, welche einen im Wesentlichen kreisrunden Querschnitt aufweisen. Um dennoch einen Einlauf- und Austrittsbereich mit kleinen Einlaufund Austrittradien zu erhalten, ist an den ringförmigen Körpern 706 und 707 jeweils noch ein Schlauch 730 und 731 angeordnet, dessen Volumen vorzugsweise deutlich kleiner, insbesondere maximal das 0,25-fache des Volumens des ringförmigen Körpers ist. Der Schlauch 730, 731 kann an dem Körper 706 bzw. 707 fest verbunden sein, beispielsweise durch eine Klebeverbindung. Alternativ oder zusätzlich können beide Elemente 706, 730 bzw. 707, 731 umgebende Elemente wie beispielsweise ein Hüllschlauch oder Hüllschlauchstücke vorgesehen sein. Die Schläuche 730, 731 können einfache, ringförmig angeordnete Schläuche sein. Sie können aber auch nach dem Vorbild von ringförmigen Körpern, wie sie bereits in verschiedenen Alternativen beschrieben worden sind, ausgestaltet sein. Darüber hinaus können statt einem Schlauch auch mehrere Schläuche, die unterschiedliche Querschnittsgrößen aufweisen können, vorgesehen sein.

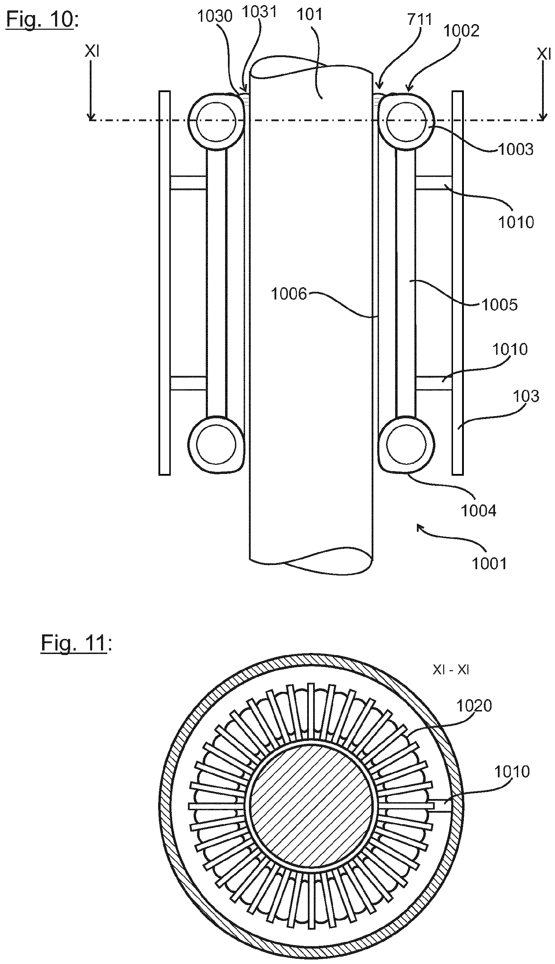

Die **Figuren 10 und 11** zeigen eine weitere Variante einer erfindungsgemäßen Kalibriereinrichtung 1001. Der Folienschlauch 101 wird hier von einer Mehrzahl an Führungselementen 1002 geführt, welche ringförmig angeordnet sind. Jedes Führungselement 1002 umfasst ein Einlaufelement 1003, welches Bestandteil des Einlaufbereichs 711 ist. Mit anderen Worten bildet die Mehrzahl an Einlaufelementen den Einlaufbereich 711 aus. Weiterhin umfasst jedes Führungselement 1002 ein Auslaufelement 1004. Im gezeigten Ausführungsbeispiel weisen das Einlaufelement 1003 und das Auslaufelement 1004 einen von einer Kreisform abweichenden Querschnitt auf, wie er im Zusammenhang mit der Figur 7 bereits erläutert worden ist. Die Einlauf- und die Auslaufelemente 1003, 1004 sind jedoch vorzugsweise aus festem Material, d. h. insbesondere der Querschnitt ändert sich nicht bei Krafteinwirkungen nicht, solange diese Krafteinwirkungen nicht zu einer Zerstörung der Elemente 1003, 1004 führen.

Ein Einlaufelement 1003 und das zugehörige Auslaufelement 1004 sind über ein Verbindungselement 1005 miteinander verbunden, wobei sogar das Einlaufelement 1003, das Verbindungselement 1005 und das Auslaufelement 1004 einstückig ausgebildet sein können, was zu Vereinfachungen im Herstellungsprozess führen kann. Dazu können die genannten Elemente als ein Kunststoffteil gegossen oder spritzgegossen sein.

Zwischen jedem Einlaufelement 1003 und dem zugehörigen Auslaufelement 1004 kann ein Flächenelement 1006 vorgesehen sein, welches als Führungsfläche des Führungselements 1002 anzusehen ist, denn dieses ist dem Folienschlauch 101 zugewandt und führt diesen. Das Flächenelement 1006 kann auch mit dem Verbindungselement 1005 zusammenfallen, d.h. sie können unmittelbar aneinander angrenzen oder sogar ein Bauteil bilden.

Zumindest ein Teil oder auch alle Führungselemente 1002 stützen sich einzeln über Stützelemente 1010 auf der Hülse 103 ab. Diese Stützelemente 1010 können Gleitlager sein, die eine Verschiebung der Führungselemente 1002 in radialer Richtung ermöglichen. Dazu liegt das betreffende Führungselement 1002 beispielsweise mit einem nicht gezeigten Ansatzstück auf dem Stützelement 1010 auf.

Insbesondere in der Figur 11 ist ferner zu erkennen, dass die einzelnen Führungselemente 1002, insbesondere die einzelnen Einlaufelemente 1003 miteinander durch Schlauchstücke 1020 verbunden sind. Dabei kann ein Schlauchstück 1020 mit seinen beiden Enden an jeweils einem Führungselement 1002, insbesondere jeweils an einem Einlaufelement 1003, befestigt sein, wobei die Befestigung vorzugsweise fluiddicht ist. Das Einlaufelement kann zudem eine Öffnung 1006 aufweisen, so dass jeweils zwei Schlauchstücke 1020 durch diese Öffnung 1006 hindurch in fluidkommunizierendem Kontakt stehen. Die Gesamtheit der Schlauchstücke 1020 kann auch einen Schlauch ausbilden, der durch die Öffnungen 1006 hindurch greift. Die Schlauchstücke 1020 bzw. der Schlauch bestehen vorteilhafterweise aus einem flexiblen Material, jedoch nicht auch einem elastischen Material. Damit können die Schlauchstücke 1020 bzw. der Schlauch nach Art eines Wellenbalges arbeiten. Schlauchstücke 1020 bzw. ein bereits erwähnter Schlauch können selbstverständlich auch mit den Auslaufelementen 1004 in gleicher Weise in Kontakt stehen. Schlauchstücke 1020 und Führungselemente können dabei einstückig ausgebildet sein oder zumindste aus gleichem Material gebildet sein. Die jeweiligen Wandstärken entscheiden darüber, ob in diesem Fall die einzelnen Elemente flexibel oder fest sind. Ein geeignetes Herstellverfahren hierfür ist der 3D-Druck.

Ein Hineingeben eines Fluids in die Schlauchstücke 1020 bzw. in den Schlauch führt nun dazu, dass zwei benachbarte Führungselemente einen größer werdenden Abstand zueinander einnehmen. Das funktioniert bei allen Führungselementen gleichzeitig nur, wenn diese dabei einen zur Symmetrieachse des Folienschlauches größer werdenden Abstand einnehmen. Damit kann auf einfache Weise der Führungsdurchmesser für den Folienschlauch 101 eingestellt werden. Dieser kann, beispielsweise durch Unterstützung eines erhöhten Innendrucks, einen größeren Radius einnehmen. In umgekehrter Weise kann durch Entnahme von Fluid, mit welchem die Schlauchstücke bzw. der Schlauch gefüllt sind, der Abstand der Führungselemente 1002 zur Symmetrieachse 714 des Folienschlauches 101 verringert werden. Da alle Führungselemente 1002 gleich gestaltet sind und auch die Schlauchstücke gleiche Eigenschaften haben, ergibt sich stets eine kreisartige Anordnung der Führungsflächen, so dass der Folienschlauch entlang einer angenäherten Kreis- bzw. Zylinderform geführt wird.

Die Flüssigkeit 1030 aus dem Flüssigkeitsreservior 1031 kann nun zwischen das Flächenelement 1006 und den Folienschlauch 101 gelangen, um so für die nötige Abkühlung des Folienschlauches 101 zu sorgen und um einen reibungsvermindernden Film zwischen dem Folienschlauch 101 und dem Flächenelemente 1006 zu bilden.

Damit nicht zu viel Flüssigkeit abgeführt wird, können zwischen je zwei Führungselemente 1002 nicht gezeigte Vorhänge vorgesehen werden, die ein Durchtreten der Flüssigkeit durch den Freiraum zwischen den Führungselementen 1002 verhindern.

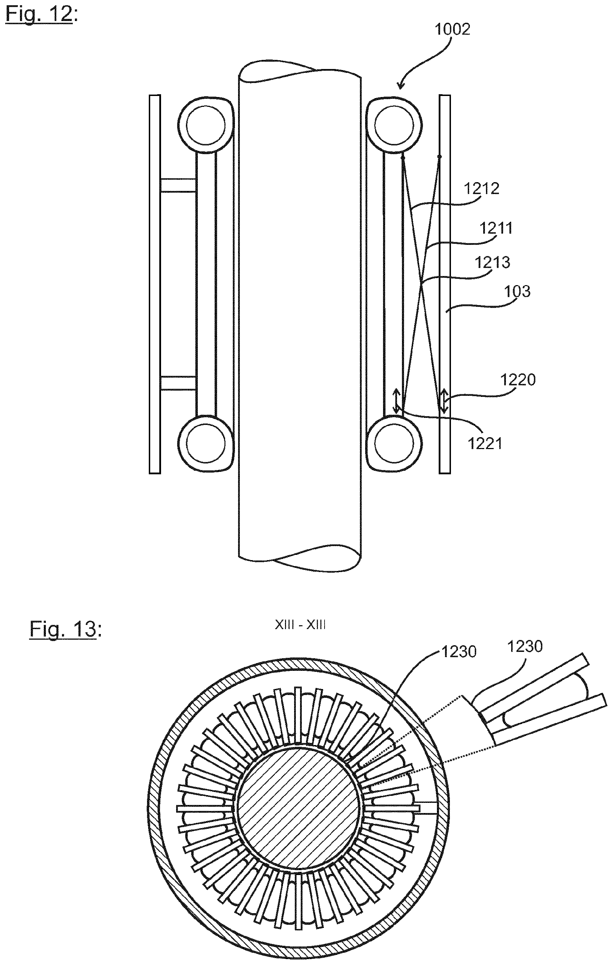

Die **Figuren 12 und 13** zeigen eine Abwandlung der in den Figuren 10 und 11 gezeigten Kalibriereinrichtung, bei der die Stützelemente 1010 durch die Stützelemente 1210 ersetzt worden sind. Diese Stützelemente 1210 sind nach Art eines Scherenhebels ausgestaltet und umfassen zwei Hebel 1211, 1212. Der Hebel 1212 ist mit seinem oberen Ende gelenkig mit dem Führungselemente 1002 verbunden, während der Hebel 1211 mit seinem oberen Ende gelenkig an der Hülse 103 angeordnet ist. Die unteren Enden der Hebel 1211 und 1212 sind gelenkig an Schiebelagern befestigt, welche zwar nicht gezeigt sind, deren Bewegungsrichtung aber durch die Doppelpfeile 1220 und 1221 gezeigt sind. Ein Antrieb der Schiebelager ist nicht notwendig, wenn, wie im Zusammenhang mit den Figuren 10 und 11 erläutert wurde, eine Radialverschiebung der Führungselemente durch eine Zu- oder Abführung eines Fluids in die oder aus den Schlauchstücken bzw. dem Schlauch erfolgt. Stattdessen oder zusätzlich kann eine Radialverschiebung durch ein motorisches Antreiben wenigstens eines der Schiebelager erfolgen. Dabei kann beispielsweise das dem Doppelpfeil 1220 zugeordnete Schiebelager durch einen Motor und ein Getriebeelement verschoben werden. Eine Verschiebung nach oben, also entgegen der Transportrichtung des Folienschlauches, führt quasi zu einer Öffnung der Schere und damit zu einer Verschiebung der Führungselemente 1002 in radialer Richtung hin zur Symmetrieachse des Folienschlauches.

Die Figur 13 zeigt nicht nur die Ansicht XIII-XIII aus der Figur 12, sondern zusätzlich eine weitere Ausgestaltungsvariante. Demnach kann an jedem Führungselement 102 eine oder mehrere Lamellen 1230 angeordnet sein, die zumindest die Lamelle oder die Lamellen eines oder mehrerer benachbarter Führungselemente zumindest zum Teil überdeckt. Damit ist es möglich, eine weitgehend homogene Zylinderform zur Führung des Folienschlauches zur Verfügung zu stellen. Dort, wo eine Lamelle in Umfangsrichtung endet, ist unweigerlich eine Stufe vorhanden, also ein Versatz in radialer Richtung. Dabei ist ein Versatz von weniger als 5 mm, insbesondere weniger als 1 und bevorzugt von weniger als 0,5mm. Die gestrichelten Linien führen zu einem vergrößerten Ausschnitt, der die Lamellen besser erkennen lässt.

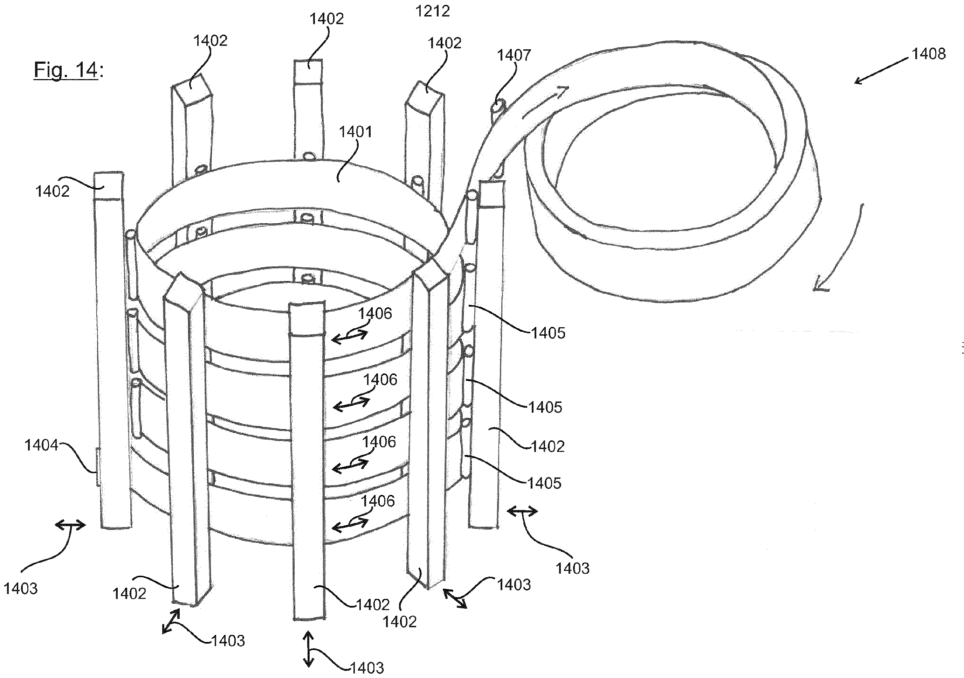

Die **Figur 14** stellt eine weitere Ausführungsform der Erfindung dar, bei der das Führungselement aus einem flexiblen Element 1401 gebildet ist, das insbesondere bandartig ausgebildet ist. Beispielsweise ist ein Stahlband vorgesehen. Das flexible Element 1401 ist spiralförmig angeordnet, so dass nach jeder Windung das Element 1401 in Transportrichtung gesehen oberhalb oder unterhalb der vorherigen Windung liegt. Damit wird erreicht, dass das flexible Element überlappungsfrei angeordnet ist und annähernd einen Zylinder bildet.

Damit die beschriebene Form beibehalten wird, sind um das flexible Element herum mehrere Stützen 1402 angeordnet, die radial nach innen gerichtete Gegenkraft für das flexible Element 1401 bereitstellen, welches derart unter Spannung steht, dass es danach trachtet, sich wieder abzuwickeln. Die Stützen 1402 sind an einem nicht gezeigten Halteelement, beispielsweise einer Hülse, insbesondere einer Metallhülse, abgestützt. Zwischen Halteelement und Stützen ist zudem wenigstens ein Stellelement vorgesehen, mit welchem einzelne oder alle Stützen sich in radialer oder entgegen der radialen Richtung verschieben lassen. Dies wird durch die Doppelpfeile 1403 angedeutet. Das Ende 1404 des flexiblen Elements 1401 ist an einer der Stützen 1402 befestigt.

Werden nun die Stützen 1402 verschoben, so muss das flexible Element an den Stützen in Umfangsrichtung vorbei geführt werden. Dazu können Rollen 1405 vorgesehen sein, welche dazu dienen, die Reibung und damit letztendlich den Verschleiß zu minimieren. Die Bewegung des flexiblen Elements 1401 wird durch die Doppelpfeile 1406 verdeutlicht. Bei kleiner werdendem Umfang ergibt sich dabei die Notwendigkeit, das flexible Element 1401 außerhalb der Kalibriereinrichtung zu sammeln. Dazu dient die Rolle 1407, die das flexible Element derart ablenkt, dass es außerhalb der Kalibriereinrichtung speicherbar ist. Dazu kann das flexible Element 1401 auf einem Wickeln 1408 aufgewickelt werden.

| **Bezugszeichenliste** | |
|---|---|
| 100 | Kalibriereinrichtung |
| 101 | Folienschlauch |
| 102 | Achse, Symmetrieachse |
| 103 | Hülse |
| 104 | Elastisch verformbares Element |
| 105 | Öffnung |
| 106 | Einlaufbereich |
| 107 | Auslaufbereich |
| 108 | Schlauch |
| 109 | Schlauch |
| 110 | Raum |
| 111 | Raum |
| 112 | Raum |
| 301 | Ausschnitt eines ringförmigen Körpers |
| 302 | Bauteil |
| 304 | Kreis |
| 305 | Mittelpunkt des Kreises |
| 401 | Schlauch |
| 601 | Feder |
| 703 | Hülse |
| 704 | Elastisch verformbares Element |
| 706 | Ringförmiger Körper |
| 707 | Ringförmiger Körper |
| 708 | Raum |
| 710 | Bauteil |
| 711 | Einlaufbereich |
| 712 | Austrittsbereich |
| 713 | Folienschlauch |
| 714 | Symmetrieachse |
| 715 | Kreisbogen |
| 716 | Gerade |
| 717 | Gerade |
| 718 | Kreisbogen |
| 720 | Stützstruktur |
| 721 | Ansatz |
| 722 | Stützelemente |
| 723 | Träger |
| 724 | Abstandshalter |
| 730 | Schlauch |
| 731 | Schlauch |
| | |
| D | Außendurchmesser |
| D' | Innendurchmesser |
| L | Führungslänge |
| P1, 2, 3 | Druck |
| r, r1, r2 | Radius |
| V1, 2, 3 | Volumen |
| z | Transportrichtung |

## Patentansprüche

1. Kalibriereinrichtung zum Kalibrieren eines Folienschlauches,
welcher einen Außendurchmesser aufweist, welcher durch einen Gasdruck, insbesondere durch einen Gasüberdruck, im Inneren des Folienschlauches einstellbar ist,
wobei zumindest ein Führungselement vorgesehen ist, welchem wenigstens eine Führungsfläche zugeordnet ist, welche der Außenoberfläche des Folienschlauches zugewandt ist und den Außendurchmesser des Folienschlauches begrenzt und den Folienschlauch in einem Bereich führt, der eine Führungslänge aufweist
wobei der Folienschlauch eine Symmetrieachse definiert
wobei der Abstand der Führungsfläche und/oder des Führungselements zu der Symmetrieachse veränderbar ist
wobei der Folienschlauch in Richtung der Schwerkraft durch die Kalibriereinrichtung führbar ist und
wobei oberhalb oder im Einlaufbereich des zumindest einen Führungselements ein Flüssigkeitsreservoir angeordnet ist, wobei die Flüssigkeit aus dem Flüssigkeitsreservoir auf den Außenumfang des Folienschlauches leitbar ist,
**dadurch gekennzeichnet,**
**dass** die Führungslänge unabhängig vom Abstand der Führungsfläche und/oder des Führungselements zur Symmetrieachse einstellbar oder konstant ist und
**dass** das zumindest eine Führungselement eine Mehrzahl einzelner Körper oder mehrere Windungen einer Feder umfasst, welche untereinander über wenigstens ein Verbindungselement verbunden sind.

2. Kalibiereinrichtung nach dem vorstehenden Anspruch
**dadurch gekennzeichnet, dass**
das zumindest eine Führungselement und/oder die Führungsfläche in Transportrichtung gesehen am Beginn der Kalibriereinrichtung einen Einlaufbereich mit einem sich in Transportrichtung verengenden Querschnitt ausbilden.

3. Kalibiereinrichtung nach dem vorstehenden Anspruch
**dadurch gekennzeichnet, dass**
der Querschnitt unabhängig vom Abstand der Führungsfläche und/oder des Führungselements zur Symmetrieachse einstellbar oder konstant ist.

4. Kalibriereinrichtung nach einem der beiden vorstehenden Ansprüche
**dadurch gekennzeichnet, dass**
der Einlaufbereich im Querschnitt zumindest teilweise einen kreisbogenförmigen Querschnitt aufweisen.

5. Kalibriereinrichtung nach einem der beiden vorstehenden Ansprüche
**dadurch gekennzeichnet, dass**
in dem Einlaufbereich zur Bildung des Flüssigkeitsreservoir ein statischer Flüssigkeitsring vorgesehen ist.

6. Kalibriereinrichtung nach Anspruch 1
**dadurch gekennzeichnet, dass**
das zumindest eine Führungselement einen zylindrischen, tonnenförmigen oder konischen Bereich für den Folienschlauch bereitstellt.

7. Kalibriereinrichtung nach einem der vorstehenden Ansprüche
**dadurch gekennzeichnet, dass**
der Abstand des zumindest einen Führungselements zur Symmetrieachse in radialer Richtung verstellbar ist.

8. Kalibriereinrichtung nach einem der vorstehenden Ansprüche **Dadurch gekennzeichnet, dass**
eine Mehrzahl an Führungselementen vorgesehen ist, welche in ihrem Abstand zur Symmetrieachse einstellbar sind.

9. Kalibriereinrichtung nach einem der vorstehenden Ansprüche
**dadurch gekennzeichnet, dass**
das zumindest eine Führungselement sich im Wesentlichen parallel zur Transportrichtung des Folienschlauches erstreckt.

10. Kalibriereinrichtung nach dem vorstehenden Anspruch
**dadurch gekennzeichnet, dass**
das wenigstens eine Verbindungselement aus elastischem Material besteht und einen geschlossenen Raum umschreibt, der mit einem Fluid befüllbar ist.

11. Kalibriereinrichtung nach einem der vorstehenden Ansprüche
**dadurch gekennzeichnet, dass**
die Führungsfläche durch wenigstens ein elastisch verformbares Element bereitgestellt ist.

12. Kalibriereinrichtung nach dem vorstehenden Anspruch
**dadurch gekennzeichnet, dass**
das wenigstens eine elastisch verformbare Element sich über mehrere Führungselemente erstreckt.

13. Verfahren zum Kalibrieren eines Folienschlauches,
wobei der Außendurchmesser des Folienschlauches durch einen Gasdruck, insbesondere durch einen Gasüberdruck, im Inneren des Folienschlauches eingestellt wird,
wobei mit zumindest einem Führungselement, welchem wenigstens eine Führungsfläche zugeordnet ist, welche der Außenoberfläche des Folienschlauches zugewandt ist, der Außendurchmesser des Folienschlauches begrenzt und der Folienschlauch geführt wird
wobei der Folienschlauch eine Symmetrieachse definiert
wobei der Abstand der Führungsfläche und/oder des Führungselements zur Symmetrieachse veränderbar ist
wobei der Folienschlauch in Richtung der Schwerkraft durch die Kalibriereinrichtung geführt wird und
wobei oberhalb oder im Anfangsbereich des zumindest einen Führungselements ein Flüssigkeitsreservoir angeordnet ist, aus welchem die Flüssigkeit aus dem Flüssigkeitsreservoir auf den Außenumfang des Folienschlauches geleitet wird,
**dadurch gekennzeichnet, dass**
die Führungslänge unabhängig vom Abstand der Führungsfläche und/oder des Führungselements zur Symmetrieachse eingestellt wird oder konstant ist und **dass** das zumindest eine Führungselement eine Mehrzahl einzelner Körper oder mehrere Windungen einer Feder umfasst, welche untereinander über wenigstens ein Verbindungselement verbunden sind..

## Claims

1. A calibrating device for calibrating a blown film,
which has an outer diameter, which can be adjusted by a gas pressure, in particular by a gas overpressure, inside the blown film,
wherein at least one guide element is provided, to which at least one guide surface is assigned, which faces the outer surface of the blown film and limits the outer diameter of the blown film and guides the blown film in a region, which has a guide length,
wherein the blown film defines an axis of symmetry,
wherein the distance of the guide surface and/or the guide element to the axis of symmetry can be changed,
wherein the blown film can be guided through the calibrating device in the direction of gravity and
wherein above or in the inlet region of the at least one guide element a liquid reservoir is arranged, wherein the liquid can be passed from the liquid reservoir to the outer circumference of the blown film,
**characterized in**
**that** the guide length, independent of the distance of the guide surface and/or of the guide element to the axis of symmetry, can be adjusted or is constant and
**that** the at least one guide element comprises a plurality of individual bodies or several coils of a spring, which are interconnected via at least one connection element.

2. The calibrating device according to the preceding claim
**characterized in that**
the at least one guide element and/or the guide surface, when viewed in the direction of transport, at the beginning of the calibrating device form an inlet region with a cross section narrowing in the direction of transport.

3. The calibrating device according to the preceding claim
**characterized in that**
the cross section, independent of the distance of the guide surface and/or of the guide element to the axis of symmetry, can be adjusted or is constant.

4. The calibrating device according to any one of the two preceding claims
**characterized in that**
the inlet region has, in the cross section, at least partially a cross section in the form of a circular arc.

5. The calibrating device according to any one of the two preceding claims
**characterized in that**
in the inlet region a static liquid ring is provided in order to form of the liquid reservoir.

6. The calibrating device according to claim 1
**characterized in that**
the at least one guide element provides a cylindrical, barrel-shaped or conical region for the blown film.

7. The calibrating device according to any one of the preceding claims
**characterized in that**
the distance of the at least one guide element to the axis of symmetry can be adjusted in the radial direction.

8. The calibrating device according to any one of the preceding claims
**characterized in that**
a plurality of guide elements is provided, which are adjustable in their distance to the axis of symmetry.

9. The calibrating device according to any one of the preceding claims,
**characterized in that**
the at least one guide element extends substantially parallel to the direction of transport of the blown film.

10. The calibrating device according to the preceding claim
**characterized in that**
the at least one connection element consists of elastic material and circumscribes a closed space, which can be filled with a fluid.

11. The calibrating device according to any one of the preceding claims,
**characterized in that**
the guide surface is provided by at least one elastically deformable element.

12. The calibrating device according to the preceding claim
**characterized in that**
the at least one elastically deformable element extends over a plurality of guide elements.

13. A method for calibrating a blown film,
wherein the outer diameter of the blown film is adjusted by a gas pressure, in particular by a gas overpressure, inside the blown film,
wherein the outer diameter of the blown film is limited and the blown film is guided with at least one guide element, which is assigned at least one guide surface, which faces the outer diameter of the blown film,
wherein the blown film defines an axis of symmetry,
wherein the distance of the guide surface and/or of the guide element to the axis of symmetry can be changed,
wherein the blown film is guided through the calibrating device in the direction of gravity and
wherein a liquid reservoir is arranged above or in the initial region of the at least one guide element, from which liquid reservoir the liquid is passed from the liquid reservoir to the outer circumference of the blown film,
**characterized in that**
the guide length, independent of the distance of the guide surface and/or of the guide element to the axis of symmetry, is adjusted or is constant and
**that** the at least one guide element comprises a plurality of individual bodies or several coils of a spring, which are interconnected via at least one connection element.

## Revendications

1. Dispositif de calibrage pour le calibrage d'un film tubulaire,
qui présente un diamètre extérieur qui peut être ajusté par une pression de gaz, plus particulièrement par une surpression de gaz à l'intérieur du film tubulaire,
dans lequel au moins un élément de guidage est prévu, auquel correspond au moins une surface de guidage qui est orientée vers la surface externe du film tubulaire et qui limite le diamètre extérieur dans une partie qui présente une longueur de guidage
dans lequel le film tubulaire définit un axe de symétrie
dans lequel la distance entre la surface de guidage et/ou l'élément de guidage et l'axe de symétrie est variable
dans lequel le film tubulaire peut être guidé en direction de la force de gravité à travers le dispositif de calibrage et
dans lequel, au-dessus ou dans la zone d'entrée de l'au moins un élément de guidage, est disposé un réservoir de liquide, dans lequel le liquide peut être conduit hors du réservoir de liquide sur la circonférence externe du film tubulaire,
**caractérisé en ce que**
la longueur de guidage peut être réglée indépendamment de la distance entre la surface de guidage et/ou l'élément de guidage et l'axe de symétrie ou est constante et
l'au moins un élément de guidage comprend une pluralité de corps individuels ou plusieurs spires d'un ressort, qui sont reliés entre eux par l'intermédiaire d'au moins un élément de liaison.

2. Dispositif de calibrage selon la revendication précédente
**caractérisé en ce que**
l'au moins un élément de guidage et/ou la surface de guidage forment, vus dans la direction de transport, au début du dispositif de calibrage, une zone d'entrée avec une section transversale se rétrécissant dans la direction de transport.

3. Dispositif de calibrage selon la revendication précédente
**caractérisé en ce que**
la section transversale peut être réglée indépendamment de la distance entre la surface de guidage et/ou l'élément de guidage et l'axe de symétrie ou est constante.

4. Dispositif de calibrage selon l'une des deux revendications précédentes
**caractérisé en ce que**
la zone d'entrée présente, au moins partiellement, une section transversale en forme d'arc de cercle.

5. Dispositif de calibrage selon l'une des deux revendications précédentes
**caractérisé en ce que**
dans la zone d'entrée, un anneau liquide statique est prévu pour la formation du réservoir de liquide.

6. Dispositif de calibrage selon la revendication 1
**caractérisé en ce que**
l'au moins un élément de guidage met à disposition, pour le film tubulaire, une zone cylindrique, en forme de tonneau ou conique.

7. Dispositif de calibrage selon l'une des revendications précédentes
**caractérisé en ce que**
la distance entre l'au moins un élément de guidage et l'axe de symétrie dans la direction radiale peut être réglée.

8. Dispositif de calibrage selon l'une des revendications précédentes
**caractérisé en ce que**
une pluralité d'éléments de guidage sont prévus, qui peuvent être réglés en ce qui concerne leur distance par rapport à l'axe de symétrie.

9. Dispositif de calibrage selon l'une des revendications précédentes
**caractérisé en ce que**
l'au moins un élément de guidage s'étend de manière globalement parallèle à la direction de transport du film tubulaire.

10. Dispositif de calibrage selon la revendication précédente
**caractérisé en ce que**
l'au moins un élément de liaison est constitué d'un matériau élastique et entoure un espace fermé qui peut être rempli d'un fluide.

11. Dispositif de calibrage selon l'une des revendications précédentes
**caractérisé en ce que**
la surface de guidage est mise à disposition par au moins un élément déformable élastiquement.

12. Dispositif de calibrage selon la revendication précédente
**caractérisé en ce que**
l'au moins un élément déformable élastiquement s'étend sur plusieurs éléments de guidage.

13. Procédé de calibrage d'un film tubulaire,
dans lequel le diamètre extérieur du film tubulaire est réglé par une pression de gaz, plus particulièrement par une surpression de gaz, à l'intérieur du film tubulaire,
dans lequel, avec au moins un élément de guidage, auquel correspond au moins une surface de guidage, qui est orientée vers la surface externe du film tubulaire, le diamètre extérieur du film tubulaire est limité et le film tubulaire est guidé,
dans lequel le film tubulaire définit un axe de symétrie,
dans lequel la distance entre la surface de guidage et/ou l'élément de guidage et l'axe de symétrie est variable
dans lequel le film tubulaire peut être guidé en direction de la force de gravité à travers le dispositif de calibrage et
dans lequel, au-dessus ou dans la zone d'entrée de l'au moins un élément de guidage, est disposé un réservoir de liquide, dans lequel le liquide peut être conduit hors du réservoir de liquide sur la circonférence externe du film tubulaire,
**caractérisé en ce que**
la longueur de guidage peut être réglée indépendamment de la distance entre la surface de guidage et/ou l'élément de guidage et l'axe de symétrie ou est constante et
l'au moins un élément de guidage comprend une pluralité de corps individuels ou plusieurs spires d'un ressort, qui sont reliés entre eux par l'intermédiaire d'au moins un élément de liaison.
